# EUROPÄISCHE PATENTSCHRIFT

(11) **EP 0 705 885 B1**
(45) Veröffentlichungstag und Bekanntmachung des Hinweises auf die Patenterteilung: **13.08.1997**
(21) Anmeldenummer: 95115034.1
(22) Anmeldetag: 25.09.1995
(51) Int. Cl.: C09B 25/00, C08K 5/3437

(54) **Massefärben mit Chinophthalonfarbstoffen**
Mass dyeing with quinophthalone dyes
Coloration dans la masse à l'aide de colorants quinophtalones

(30) Priorität: 06.10.1994 DE 4435714
(43) Veröffentlichungstag der Anmeldung: 10.04.1996
(73) Patentinhaber: BAYER AG, 51368 Leverkusen (DE)
(72) Erfinder: Michaelis, Stephan, Dr., D-51519 Odenthal (DE); Roschger, Peter, Dr., D-51063 Köln (DE); Hederich, Volker, Dr., D-51061 Köln (DE)

(56) Entgegenhaltungen:
- DE-A- 1 569 672
- FR-A- 2 143 942
- CHEMICAL ABSTRACTS, vol. 86, no. 12, 21.März 1977 Columbus, Ohio, US; abstract no. 74331f, K.WATANABE ET AL. 'dyeing polyester fibers and plastics with quinophthalone dyes' Seite 86;

## Beschreibung

Die Erfindung betrifft ein Verfahren zum Massefärben von Kunststoffen unter Verwendung von Chinophthalonfarbstoffen sowie neue Chinophthalonfarbstoffe.

Chinophthalonfarbstoffe sind bereits aus DE-A 15 69 672 zum Färben von Textilmaterialien, aus US-A-5 037 799 für den Thermotransferdruck und aus JP-A-61 044 956 zum Färben von flüssigen Kristallzusammensetzungen bekannt. Vereinzelt sind Chinophthalonfarbstoffe auch für das Massefärben von Kunststoffen beschrieben worden. Solche Farbstoffe sind beispielsweise in DE-A 21 32 681 und DE-A 22 03 348 in Form von Verbindungen genannt, deren Hydroxychinaldinrest in 4-Stellung halogeniert ist. Diese weisen jedoch eine ungenügende Thermostabilität für die dieser Erfindung zugrundeliegende Verwendung auf. Weitere Chinophthalonfarbstoffe sind beispielsweise aus JP-A-02 187 470 und JP-A-51092 371 bekannt.

Es wurde nun ein Verfahren zum Massefärben von Kunststoffen gefunden, das dadurch gekennzeichnet ist, daß ein Farbstoff der Formel (I) 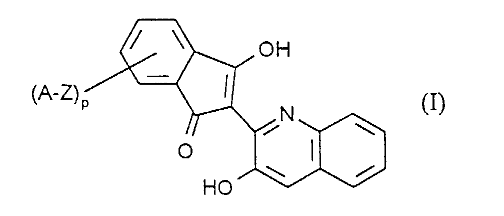 verwendet wird,
worin
- Z: für SO₂ oder CO,
- A: für Alkyl, insbesondere C₁-C₁₀-Alkyl oder Aryl, insbesondere C₆-C₁₀-Aryl, steht, das jeweils unsubstituiert oder durch Halogen, C₁-C₄-Alkyl, C₁-C₄-Alkylmercapto, Cyan, C₁-C₄-Alkylcarbamino, C₆-C₁₀-Aryl, C₆-C₁₀-Aryloxy oder C₁-C₄-Alkoxy substituiert ist und
- p: 1 oder 2 bedeutet.

Bevorzugt ist das obige Verfahren, bei dem solche Farbstoffe der Formel (I) verwendet werden, worin A für C₆-C₁₀-Aryl, insbesondere Phenyl oder Naphthyl steht, das unsubstituiert oder durch Halogen, insbesondere Chlor, Brom und Fluor, C₁-C₄-Alkyl, wie Methyl, Ethyl, n-Propyl, Isopropyl, n-Butyl und tert.-Butyl, Cyan, C₁-C₄-Alkylcarbamino, Phenyl, Phenoxy oder C₁-C₄-Alkoxy, insbesondere Methoxy und Ethoxy substituiert ist. Diese Substituenten sind im übrigen auch dann bevorzugt, wenn A ein substituiertes C₁-C₁₀-Alkyl bedeutet.

In einer bevorzugten Ausführungsform steht p für 1.

Bevorzugte aus A und Z gemeinsam gebildete Arylcarbonylreste sind beispielsweise: Benzoyl, 2-, 3- und 4-Chlorbenzoyl, 2-, 3- und 4-Methylbenzoyl, 4-Methoxybenzoyl, 4-Ethoxybenzoyl, 2,3-Dichlorbenzoyl, 3,5-Dimethylbenzoyl, 4-Phenylbenzoyl, Naphthoyl-1, Naphthoyl-2, 2-Methoxy-naphthoyl-1.

Die aus A und Z gemeinsam bevorzugt gebildeten Arylsulfonylreste sind beispielsweise: Benzolsulfonyl, 4-Methylbenzolsulfonyl, 4-Methoxybenzolsulfonyl, 4-Isopropylbenzolsulfonyl, 2- oder 4-Chlorbenzolsulfonyl, 2,4-Dichlorbenzolsulfonyl, 4-Methylmercaptobenzolsulfonyl, 4-Acetaminobenzolsulfonyl, 1-Naphthalinsulfonyl, 2-Naphthalinsulfonyl.

Besonders bevorzugt werden Farbstoffe der Formel (I) in dem obigen Verfahren verwendet, in denen A und Z gemeinsam einen gegebenenfalls substituierten Benzoyl- oder Benzolsulfonyl-Rest bilden, insbesondere solche, die der Formel (II) oder (III) entsprechen 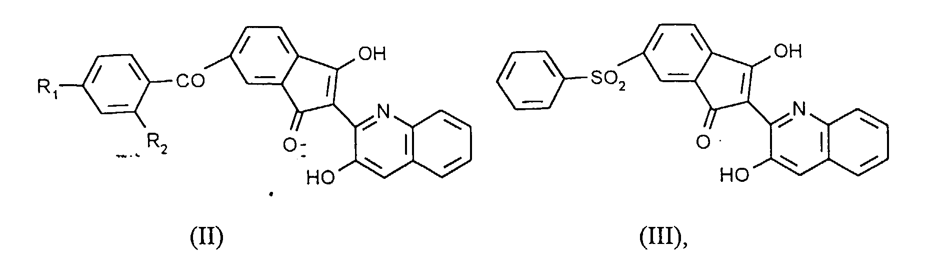 worin R¹ und R² unabhängig voneinander Wasserstoff oder Methyl bedeuten.

Weiter Gegenstand der Erfindung sind Farbstoffe der Formel (I) 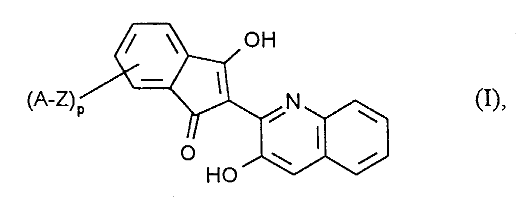 worin
- Z: für SO₂,
- A: für Aryl steht, das jeweils unsubstituiert oder durch Halogen, C₁-C₄-Alkyl, C₁-C₄-Alkylmercapto, Cyan, C₁-C₄-Alkylcarbamino, C₆-C₁₀-Aryl, C₆-C₁₀-Aryloxy oder C₁-C₄-Alkoxy substituiert ist und
- p: 1 oder 2 bedeutet.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders oder bei denen der Farbstoff oder Farbstoffmischungen bereits den Ausgangskomponenten zur Herstellung des Kunststoffes, z.B. den Monomeren, vor der Polymerisation zugesetzt wird.

Besonders bevorzugte Kunststoffe sind Thermoplaste, beispielsweise Vinylpolymere, Polyester oder Polyamide.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylate u.a.

Weiterhin geeignete Polyester sind: Polyethylenterephthalate, Polybutylenterephthalate, Polycarbonate und Celluloseester.

Bevorzugt sind Polystyrol, Styrol-Mischpolymere, Polycarbonate und Polymethacrylat. Besonders bevorzugt ist Polystyrol.

Die erwähnten hochmolekularen Verbindungen können einzeln oder in Gemischen, als plastische Massen oder Schmelzen vorliegen.

Die erfindungsgemäß verwendeten Farbstoffe werden in feinverteilter Form zur Anwendung gebracht, wobei Dispergiermittel mitverwendet werden können aber nicht müssen.

Werden die Farbstoffe (I) nach der Polymerisation des zu färbenden Kunststoffes eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante, gelbe Färbungen mit guter Hitzebeständigkeit sowie guter Licht- und Wetterechtheit.

In das erfindungsgemäße Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Erfindung wird erläutert durch - jedoch nicht beschränkt auf - die folgenden Beispiele, in denen die Teile gewichtsmäßig angegeben sind und Prozentangaben Gewichtsprozente (Gew.-%) bedeuten.

### Beispiel 1

### A) Darstellung

65 Teile Hydroxychinaldincarbonsäure, 200 Teile Trichlorbenzol und 100 Teile 4-Benzolsulfonylphthalsäure werden 6 h auf 215-220°C erhitzt, wobei das Reaktionswasser abdestilliert. Es wird mit 200 Teilen Methanol verdünnt, abgesaugt und mit Methanol gewaschen. Nach dem Trocknen erhält man 98 Teile des Farbstoffes der Formel

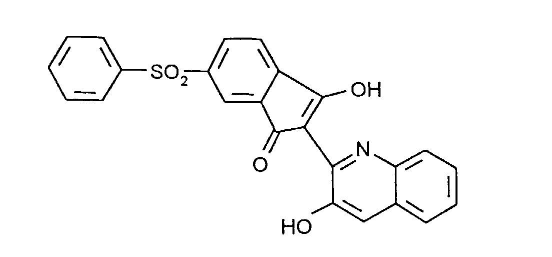

### B) Färbebeispiele

### Beispiel a)

100 Teile Polystyrol-Granulat und 0,02 Teile des Farbstoffes aus Beispiel 1 werden im Trommelmischer während 15 Minuten intensiv vermischt. Das trocken angefärbte Granulat wird bei 240°C auf einer Schneckenspritzgießmaschine verarbeitet. Man erhält transparente, gelbe Platten von sehr guter Lichtechtheit. Anstelle von Polystyrol-Polymerisat können auch Mischpolymerisate mit Butadien und Acrylnitril verwendet werden. Setzt man zusätzlich 0,5 Teile Titandioxid zu, so erhält man farbstarke gedeckte Färbungen.

### Beispiel b)

0,015 Teile des Farbstoffes aus Beispiel 1 und 100 Teile Polymethylmethacrylat werden trocken vermischt und auf einem 1-Wellenextruder bei 230°C homogenisiert. Das als Strang aus dem Extruder austretende Material wird granuliert. Es kann anschließend zu Formen verpreßt werden. Man erhält einen transparent gelb gefärbten Kunststoff mit guter Licht- und Wetterechtheit.

### Beispiel c)

100 Teile eines handelsüblichen Polycarbonats werden in Form von Granulat mit 0,03 Teilen des Farbstoffes aus Beispiel 1) trocken gemischt. Das so bestäubte Granulat wird auf einem 2-Wellenextruder bei 290°C homogenisiert. Man erhält eine transparente gelbe Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

Arbeitet man wie oben beschrieben, aber unter Zusatz von 1 % Titandioxid, so erhält man eine gelb gedeckte Färbung.

### Beispiel d)

Mit 100 Teilen Styrol-Acrylnitril-Copolymerisat werden 0,04 Teile des Farbstoffes trocken vermischt und in einem 2-Wellenextruder bei 190°C homogenisiert, granuliert und dann zu Formen auf übliche Weise verpreßt. Man erhält einen transparenten gelben Kunststoff mit einer guten Lichtechtheit.

### Beispiel e)

0,025 Teile des Farbstoffs aus Beispiel 1) werden mit 100 Teilen Polyethylenterephthalat einer transparenten Type vermischt und in einem 2-Wellenextruder bei 280°C homogenisiert. Man erhält eine transparente, gelbe Färbung mit guter Lichtechtheit. Nach anschließender Granulierung kann der eingefärbte Kunststoff nach den üblichen Methoden der thermoplastischen Verformung verarbeitet werden. Arbeitet man unter Zusatz von 1% Titandioxid, so erhält man eine gedeckte Färbung.

### Beispiel f)

In 98,9 Teilen Styrol werden 0,05 Teile tert.-Dodecylmercaptan sowie 0,05 Teile des Farbstoffes aus Beispiel 1 gelöst. Diese Lösung dispergiert man in einer Lösung aus 200 Teilen entsalztem Wasser, 0,3 Teilen teilverseiftem Polyvinylacetat (z.B. Mowiol® 50/88 der Fa. Hoechst) und 0,05 Teilen Dodecylbenzolsulfonat. Nach Zusatz von 0,1 Teilen Dibenzoylperoxid in 1 Teil Styrol wird die Dispersion unter kräftigem Rühren auf 80°C erhitzt und die Polymerisation gestartet. Bei Anwendung folgender Polymerisationsbedingungen: 4 h bei 80°C, 2 h bei 90°C, 3 h bei 110°C, 2 h bei 130°C, erhält man das Polymerisat in einer Ausbeute von 98 % der Theorie. Das Polymerisat fällt in Form von Perlen an, die je nach Rührbedingungen einen Durchmesser von 0,1 bis 1,5 mm (D₅₀-Wert) aufweisen. Das Polymerisat wird durch Filtration vom Serum getrennt, bei 110°C auf eine Restfeuchte von 0,5 % getrocknet. Nach dem Aufschmelzen in einem Mischaggregat (Heißwalze) werden 0,5 % Zinkstearat und 0,2 % Ionol® der Fa. Shell ( 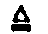 2,6-Di-tert.-butyl-p-kresol) zugemischt und das Polymerisat granuliert.

Das Polymerisat kann nach den üblichen Methoden der thermoplastischen Verformung. z.B. im Spritzguß-Verfahren, zu gelben transparenten Formteilen verarbeitet werden.

### Beispiel g)

In 74,8 Teilen Styrol und 25 Teilen Acrylnitril werden 0,2 Teile tert.-Dodecylmercaptan sowie 0,01 Teile des Farbstoffes aus Beispiel 1) gelöst, diese Lösung wird anschließend in einer Lösung aus 200 Teilen vollantsalztem Wasser und 0,2 Teilen eines mit Natriumhydroxid neutralisierten Copolymerisats von Styrol und Maleinsäureanhydrid dispergiert. Nach Zusatz von 0,1 Teilen Dibenzoylperoxid, gelöst in einem Teil Styrol, wird die Dispersion unter kräftigem Rühren auf 80°C erhitzt und die Polymerisation gestartet. Nach der Polymerisation wie im Beispiel f) wird auch in gleicher Weise, wie im Beispiel angegeben, aufgearbeitet. Als Schmiermittel wird 0,5 % Zinkstearat und als Alterungsschutzmittel 0,5 % Ionol® der Fa. Shell ( 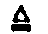 2,6-Di-tert.-butyl-p-kresol) auf der Heißwalze eingearbeitet. Das granulierte Polymerisat läßt sich zu transparenten gelben Formteilen verspritzen.

### Beispiel h)

In einem kontinuierlich arbeitenden, überflutet gefahrenen Vorreaktor wird eine Lösung aus 99,95 Teilen Styrol, 0,04 Teilen des Farbstoffes aus Beispiel 1) und 0,01 Teil Di-tert.-butylperoxid eingefahren und bei einer Temperatur von 75°C anpolymerisiert. Die aus dem Vorreaktor austretende, anpolymerisierte Lösung (Polystyrol-Gehalt 20 %) wird in einem 2-Wellenschneckenaggregat eingeführt. Die beiden Wellen laufen mit 20 Upm gegenläufig. Die vier heiz- bzw. kühlbaren Segmente der Schneckenmaschine werden in der Reihenfolge Produkteintritt - Produktaustritt auf 110°C, 130°C, 160°C, 180°C gehalten. Das Polymerisat verläßt den Schneckenreaktor mit einer Feststoffkonzentration von 80 %. In einem nachgeschalteten Extruder werden 3 Gew-Teile Ionol® der Fa. Shell ( 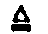 2,6-Di-tert.-butyl-p-kresol) und 5 Gew.-Teile Octylalkohol pro 1000 Gew.-Teile Polymerlösung zudosiert, das Polymerisat entgast und anschließend granuliert. Das gelb gefärbte Granulat kann zu Formteilen verarbeitet werden.

### Beispiel i)

0,02 Teile des Farbstoffes aus Beispiel 1) werden in 74,97 Teilen Styrol und 25 Teilen Acrylnitril bzw. Methacrylnitril gelöst. Nach Zugabe von 0,01 Teilen Di-tert.-butylperoxid wird die so erhaltene Lösung in einem kontinuierlich arbeitenden, überflutet gefahrenen Vorreaktor eingefahren. Die Polymerisation und Aufarbeitung erfolgt wie im Beispiel h) angegeben. Das transparente, gelbe Granulat kann nach den üblichen Methoden der Verarbeitung thermoplastischer Massen zu Profilen und Platten weiterverarbeitet werden.

### Beispiel k)

In 99,97 Teilen Methylmethacrylat werden 0,03 Teile des Farbstoffes aus Beispiel 1) gelöst. Nach Zugabe von 0,1 Teilen Dibenzoylperoxid wird die Lösung auf 120°C erhitzt und die Polymerisation gestartet. Nach 30 Minuten wird das anpolymerisierte Methylmethacrylat zwischen zwei Glasplatten bei 80°C während zehn Stunden auspolymerisiert. Man erhält gelbe transparente Polymethylmethacrylat-Platten.

### Beispiel l)

100 Teile Polyamid-6-Schnitzel, erhalten durch Polymerisation von ε-Caprolactam, werden mit 0,05 Teilen des Farbstoffes aus Beispiel 1 in einer Schüttelmaschine innig vermischt. Die so erhaltenen gepuderten Schnitzel werden bei 260°C in einem Extruder aufgeschmolzen, die erhaltene Schmelze durch eine Einloch-Düse vom Durchmesser 0,5 mm gepreßt und der austretende Faden mit einer Geschwindigkeit von ca. 25 m/min abgezogen. Der Faden läßt sich in heißem Wasser auf das Vierfache verstrecken. Erhalten wird ein transparenter gelb gefärbter Faden von ausgezeichneter Lichtechtheit. Will man eine gedeckte Färbung erhalten, so gibt man zusätzlich 0,5 Teile Titandioxid zu.

Die Verweilzeit im Extruder kann ohne Beeinträchtigung des Farbtons bis zu 30 Minuten betragen.

Auf analoge Weise wie in Beispiel 1 beschrieben, wurden die in der nachfolgenden Tabelle 1 aufgeführten Farbstoffe erhalten mit denen Kunststoffe entsprechend den Färbebeispielen a) - l) gefärbt wurden.

Dabei wurde die 4-Benzolsulfonylphthalsäure aus Beispiel 1 durch die Phthalsäurederivate der Tabelle 1 ersetzt.

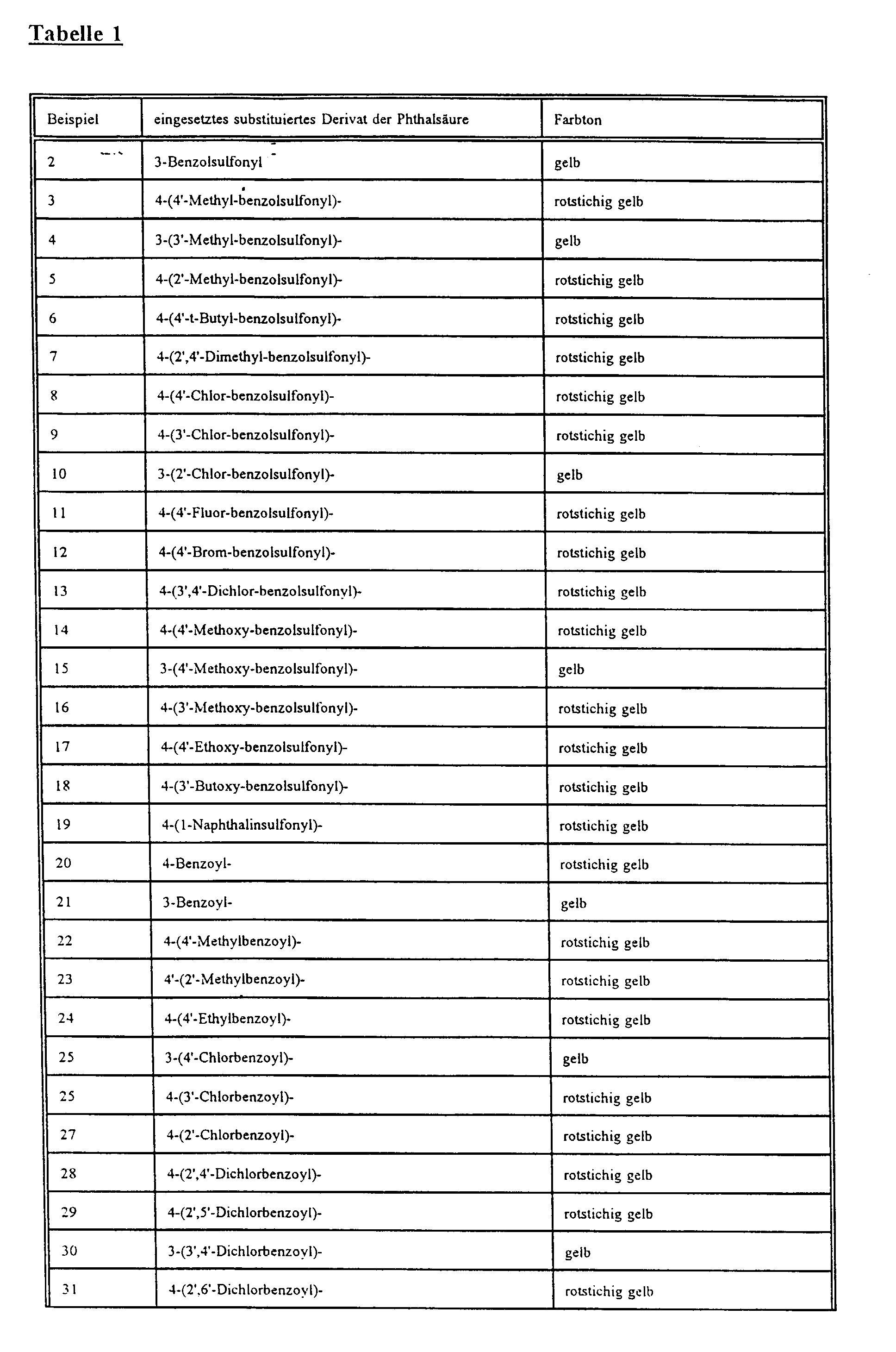

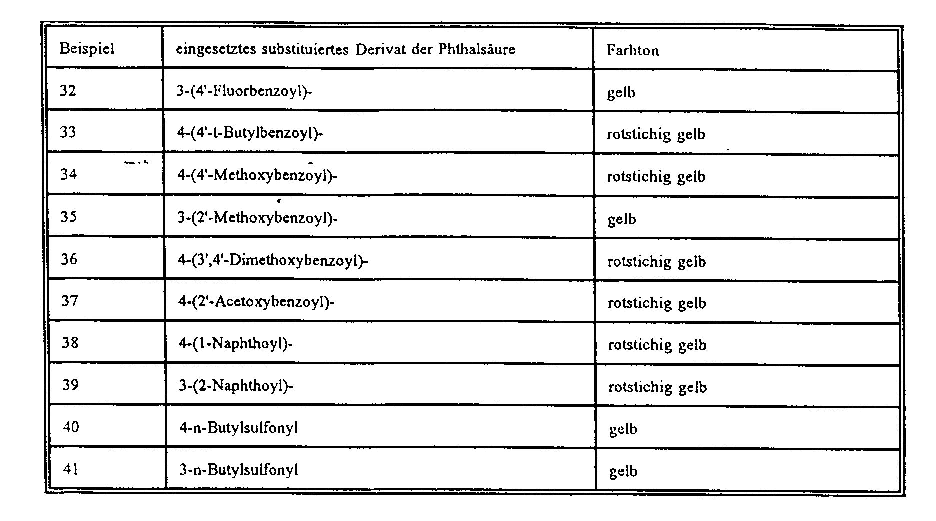

### Beispiel 42 (Vergleichsbeispiel)

Eine Mischung aus

| | |
|---|---|
| 97,9 Gew.-% | handelsüblichen Polystyrolgranulats |
| 2 Gew.-% | Titandioxid (Rutil-Typ) und |
| 0,1 Gew.-% | des Farbstoffs aus Beispiel 20 (Farbstoff A) der vorliegenden Anmeldung bzw. eines Farbstoffes |

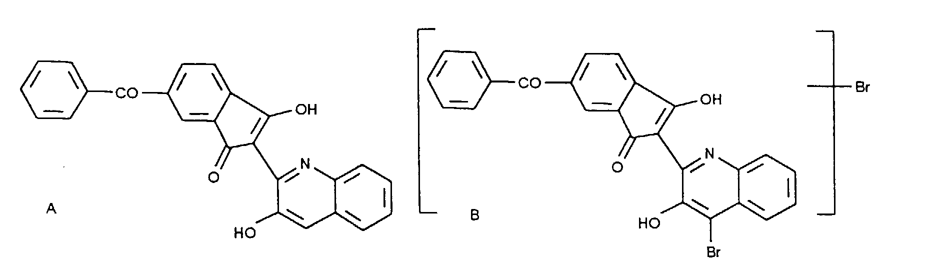

hergestellt nach DE 2 203 348, Beispiel 24 (Farbstoff B)
wurden bei Temperaturen von 220, 240, 260, 280 und 300°C in einer Schneckenspritzgießmaschine mit einer Verweilzeit von 5 Minuten zu Testplättchen verarbeitet.

Zum Vergleich wird die gleiche Mischung mit den beiden Farbstoffen bei 200°C mit einer Verweilzeit von 25 Sekunden zu den Standardtestplättchen verarbeitet.

Zur Auswertung werden die Testplättchen mit Hilfe von spektrophotometrischen Methoden vermessen und die Farbabweichung zum Standard in Form von Δ-Werten bestimmt (siehe Tabelle unten).

**Tab.:**

| Unterschiede des Farbtons zwischen den Test- und den Standardplättchen | | |
|---|---|---|
| T/°C | Δ-Werte | Δ-Werte |
| | Farbstoff A | Farbstoff B |
| 220 | 0,2 | 0,0 |
| 240 | 0,3 | 0,2 |
| 260 | 0,4 | 0,9 |
| 280 | 0,6 | 2,9 |
| 300 | 0,6 | 21,5 |

In Anlehnung an DIN 53 772 gilt ein Farbstoff bis zu einem Δ-Wert von 3 als temperaturstabil.

Ein großer Δ-Wert bedeutet eine große Farbtonabweichung vom Standard, der wiederum bei 220°C in 25 Sekunden hergestellt wurde. Damit einher geht die Thermostabilität bei entsprechender Temperatur.

Aus den obigen Ergebnissen wird deutlich, daß der erfindungsgemäß verwendete Farbstoff (A) überraschenderweise eine sehr viel bessere Thermostabilität aufweist als der vorbeschriebene Farbstoff (B).

Farbstoffe mit guten Thermostabilitäten bei hohen Temperaturen sind insbesondere dann wichtig, wenn die Verarbeitungstemperaturen der zu färbenden Kunststoffe sehr hoch sind.

## Patentansprüche

1. Verfahren zum Massefärben von Kunststoffen, dadurch gekennzeichnet, daß ein Farbstoff der Formel (I) 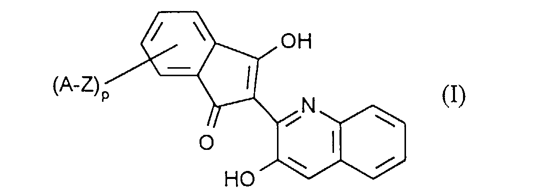 verwendet wird,
worin
Z für SO₂ oder CO,
A für Alkyl oder Aryl steht, das jeweils unsubstituiert oder durch Halogen, C₁-C₄-Alkyl, C₁-C₄-Alkylmercapto, Cyan, C₁-C₄-Alkylcarbamino, C₆-C₁₀-Aryl, C₆-C₁₀-Aryloxy oder C₁-C₄-Alkoxy substituiert ist und
p 1 oder 2 bedeutet.

2. Verfahren gemäß Anspruch 1, dadurch gekennzeichnet, daß
A C₁-C₁₀-Alkyl oder C₆-C₁₀-Aryl bedeutet, das unsubstituiert oder durch Halogen, C₁-C₄-Alkyl, Cyan, C₁-C₄-Alkylcarbamino, Phenyl, Phenoxy oder C₁-C₄-Alkoxy substituiert ist.

3. Verfahren gemäß Anspruch 1, dadurch gekennzeichnet, daß
A für Phenyl oder Naphthyl steht, das unsubstituiert ist oder durch Cl, Br, F, Methyl, Ethyl, Isopropyl, n-Propyl, n-Butyl. tert.-Butyl, Cyan, C₁-C₄-Alkylmercapto, C₁-C₄-Alkylcarbonylamino, Phenyl, Phenoxy oder C₁-C₄-Alkoxy substituiert ist und
p gleich 1 bedeutet.

4. Verfahren gemäß Anspruch 1, dadurch gekennzeichnet, daß Farbstoffe der Formel (I) verwendet werden, die der Formel (II) oder (III) entsprechen 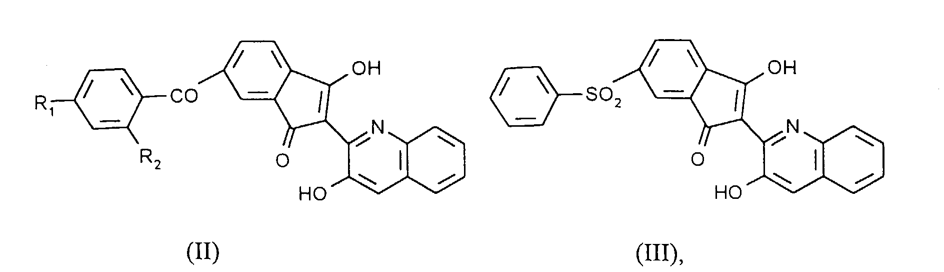 worin R¹ und R² unabhängig voneinander Wasserstoff oder Methyl bedeuten.

5. Verfahren gemäß Anspruch 1, dadurch gekennzeichnet, daß der Kunststoff ein Thermoplast ist.

6. Verfahren nach Anspruch 1, dadurch gekennzeichnet, daß der zu färbende Kunststoff ein Vinylpolymer, insbesondere Polystyrol oder ein Polyester ist.

7. Kunststoffe gefärbt nach wenigstens einem der Verfahren 1 bis 6.

8. Verfahren nach Anspruch 1, dadurch gekennzeichnet, daß der zu färbende Kunststoff ein Polyester ist.

9. Farbstoff der Formel (I) 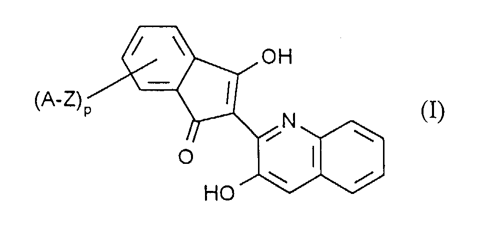 worin
Z für SO₂,
A für Aryl steht, das jeweils unsubstituiert oder durch Halogen, C₁-C₄-Alkyl, C₁-C₄-Alkylmercapto, Cyan, C₁-C₄-Alkylcarbamino, C₆-C₁₀-Aryl, C₆-C₁₀-Aryloxy oder C₁-C₄-Alkoxy substituiert ist und
p 1 oder 2 bedeutet.

## Claims

1. Process for the bulk dyeing of plastics, characterized in that a dyestuff of the formula (I) 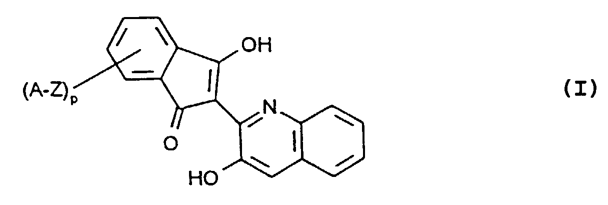 wherein
Z represents SO₂ or CO,
A represents alkyl, or aryl, each of which is unsubstituted or substituted by halogen, C₁-C₄-alkyl, C₁-C₄-alkylmercapto, cyano, C₁-C₄-alkylcarbamino, C₆-C₁₀-aryl, C₆-C₁₀-aryloxy or C₁-C₄-alkoxy and
p denotes 1 or 2,
is used.

2. Process according to Claim 1, characterized in that
A denotes C₁-C₁₀-alkyl or C₆-C₁₀-aryl, which is unsubstituted or substituted by halogen, C₁-C₄-alkyl, cyano, C₁-C₄-alkylcarbamino, phenyl, phenoxy or C₁-C₄-alkoxy.

3. Process according to Claim 1, characterized in that
A represents phenyl or naphthyl, which is unsubstituted or substituted by Cl, Br, F, methyl, ethyl, isopropyl, n-propyl, n-butyl, tert-butyl, cyano, C₁-C₄-alkylmercapto, C₁-C₄-alkylcarbonylamino, phenyl, phenoxy or C₁-C₄-alkoxy and
p is 1.

4. Process according to Claim 1, characterized in that dyestuffs of the formula (I) which correspond to the formula (II) or (III) 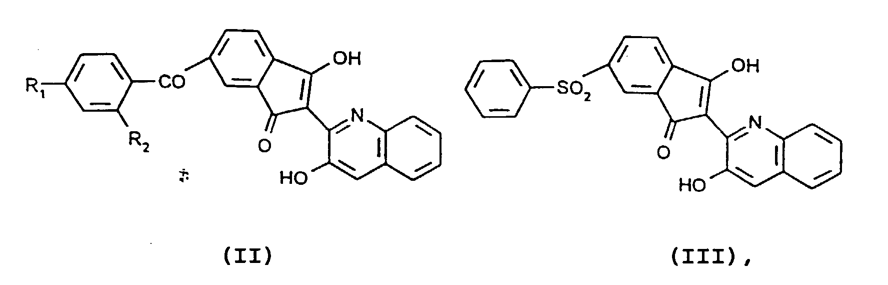 wherein R¹ and R² independently of one another denote hydrogen or methyl,
are used.

5. Process according to Claim 1, characterized in that the plastic is a thermoplastic.

6. Process according to Claim 1, characterized in that the plastic to be dyed is a vinyl polymer, in particular polystyrene, or a polyester.

7. Plastics dyed according to at least one of processes 1 to 6.

8. Process according to Claim 1, characterized in that the plastic to be dyed is a polyester.

9. Dyestuff of the formula (I) 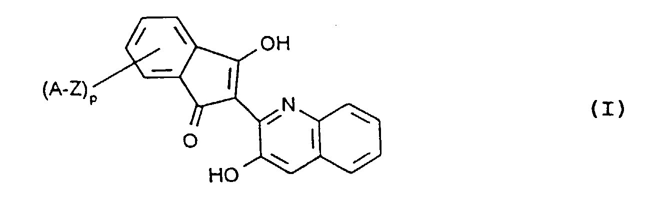 wherein
Z represents SO₂,
A represents aryl, which is unsubstituted or substituted by halogen, C₁-C₄-alkyl, C₁-C₄-alkylmercapto, cyano, C₁-C₄-alkylcarbamino, C₆-C₁₀-aryl, C₆-C₁₀-aryloxy or C₁-C₄-alkoxy, and
p denotes 1 or 2.

## Revendications

1. Procédé pour colorer des résines synthétiques dans la masse, caractérisé en ce que l'on utilise à cet effet un colorant de formule (I) 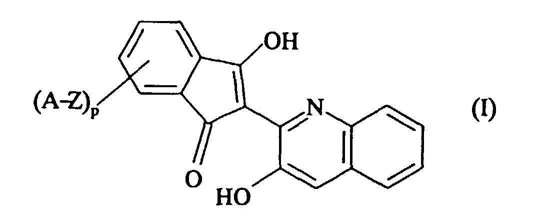 dans laquelle
Z représente SO₂ ou CO,
A représente un groupe alkyle ou aryle, chacun d'eux non substitué ou substitué par des halogènes, des groupes alkyle en C₁-C₄, alkylmercapto en C₁-C₄, cyano, (alkyle en C₁-C₄)carbamino, aryle en C₆-C₁₀,aryloxy en C₆-C₁₀ ou alcoxy en C₁-C₄ et
p est égal à 1 ou 2.

2. Procédé selon la revendication 1, caractérisé en ce que
A représente un groupe alkyle en C₁-C₁₀, ou aryle en C₆-C₁₀, chacun d'eux non substitué ou substitué par des halogènes, des groupes alkyle en C₁-C₄, cyano, (alkyle en C₁-C₄)carbamino, phényle, phénoxy ou alcoxy en C₁-C₄.

3. Procédé selon la revendication 1, caractérisé en ce que
A représente un groupe phényle ou naphtyle non substitué ou substitué par Cl, Br, F, des groupes méthyle, éthyle, isopropyle, n-propyle, n-butyle, tert-butyle, cyano, alkylmercapto en C1-C4, (alkyle en C₁-C₄)carbonylamino, phényle, phénoxy ou alcoxy en C₁-C₄ et
p est égal à 1.

4. Procédé selon la revendication 1, caractérisé en ce que l'on utilise des colorants de formule (I) qui répondent à la formule (II) ou à la formule (III) 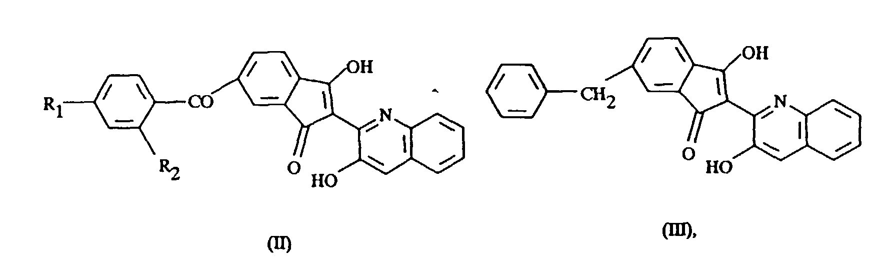 dans lesquelles R¹ et R² représentent chacun, indépendamment l'un de l'autre, l'hydrogène ou un groupe méthyle.

5. Procédé selon la revendication 1, caractérisé en ce que la résine synthétique est une résine thermopiastique.

6. Procédé selon la revendication 1 caractérisé en ce que la résine à colorer est un polymère vinylique, plus spécialement un polystyrène ou un polyester.

7. Résines synthétiques colorées selon au moins un des procédés 1 à 6.

8. Procédé selon la revendication 1, caractérisé en ce que la résine à colorer est un polyester.

9. Colorant de formule (I) 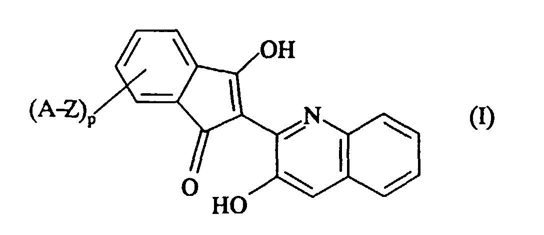 dans laquelle
Z représente SO₂,
A représente un groupe aryle non substitué ou substitué par des halogènes, des groupes alkyle en C₁-C₄, alkylmercapto en C₁-C₄, cyano, (alkyle en C₁-C₄)carbamino, aryle en C₆-C₁₀, aryloxy en C₆-C₁₀ ou alcoxy en C₁-C₄ et
p est égal à 1 ou 2.
